(19)

**Europäisches Patentamt**
**European Patent Office**
**Office européen des brevets**

(11) **EP 3 839 236 A1**

(12) **EUROPÄISCHE PATENTANMELDUNG**

(43) Veröffentlichungstag:
**23.06.2021 Patentblatt 2021/25**

(21) Anmeldenummer: **20214912.6**

(22) Anmeldetag: **17.12.2020**

(51) Int Cl.:
*F02D 41/30* (2006.01)      *F02D 41/40* (2006.01)
*F02D 19/10* (2006.01)      *F02M 25/00* (2006.01)
*F02D 15/00* (2006.01)      *F02B 1/12* (2006.01)
*F02B 7/00* (2006.01)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME
KH MA MD TN**

(30) Priorität: **19.12.2019 DE 102019135330**

(71) Anmelder:
• **Gildehaus, Jürgen**
  **49090 Osnabrück (DE)**

• **Hinken, Franz-Josef**
  **49186 Bad Iburg (DE)**

(72) Erfinder:
• **Gildehaus, Jürgen**
  **49090 Osnabrück (DE)**
• **Hinken, Franz-Josef**
  **49186 Bad Iburg (DE)**

(74) Vertreter: **Bossmeyer, Jörg Peter**
  **Wassermannstrasse 25**
  **49074 Osnabrück (DE)**

(54) **VERFAHREN ZUM BETREIBEN EINER HUBKOLBENMASCHINE**

(57)      Verfahren zum Betreiben einer Hubkolbenmaschine (1), die eine Kurbelwelle (3) und wenigstens einen Zylinder (4) aufweist, wobei in einen Brennraum (8) der Hubkolbenmaschine (1) ein Kraftstoff-Luft-Gemisch (10) eingebracht und durch einen Kolben (5) verdichtet wird, bis sich das Kraftstoff-Luft-Gemisch (10) entzündet und unter Gleichraumbedingungen im Brennraum (8) verbrennt, in den ein Pilotkraftstoff (11) eingebracht und verbrannt wird, dessen Verbrennung eine Niedertemperaturreaktion und eine dieser nachfolgende Hochtemperaturreaktion aufweist, wobei die Verbrennung des Kraftstoff-Luft-Gemisches (10) unter Gleichraumbedingungen durch den Zeitpunkt der durch die Niedertemperaturreaktion des Pilotkraftstoffs (11) erfolgten Wärmefreisetzung und/oder durch die Menge der durch die Niedertemperaturreaktion des Pilotkraftstoffs (11) freigesetzten Wärme gesteuert wird.

Fig. 1

**Beschreibung**

Die Erfindung betrifft ein Verfahren zum Betreiben einer Hubkolbenmaschine, die eine Kurbelwelle, wenigstens einen Zylinder, wenigstens einen in dem Zylinder zwischen einem unteren Totpunkt und einem oberen Totpunkt in einer Hubrichtung hin und her bewegbaren Kolben und wenigstens ein Pleuel aufweist, mittels welchem der Kolben mit der Kurbelwelle verbunden ist, wobei in einen Brennraum der Hubkolbenmaschine ein Kraftstoff-Luft-Gemisch eingebracht und durch den Kolben verdichtet wird, bis sich das Kraftstoff-Luft-Gemisch entzündet und unter Gleichraumbedingungen im Brennraum verbrennt, in den ein Pilotkraftstoff eingebracht und verbrannt wird, dessen Verbrennung eine Niedertemperaturreaktion und eine dieser nachfolgende Hochtemperaturreaktion aufweist.

Unter der spezifischen Wärmekapazität eines Gases versteht man Cv als isochore spezifische Wärmekapazität im Sinne eines Verhältnisses aus zugeführter Wärme und bewirkter Temperaturerhöhung bei konstantem Volumen während der Prozessführung sowie Cp als isobare spezifische Wärmekapazität im Sinne eines Verhältnisses aus zugeführter Wärme und bewirkter Temperaturerhöhung bei konstantem Druck während der Prozessführung.

Der allgemeine Zusammenhang vereinfacht sich für ideale Gase wie folgt:

$$Cp = Cv + R;$$

R = universelle Gaskonstante

Die bedeutungsvollen Wärmekraftmaschinen Gasturbine und Verbrennungsmotor arbeiten in der Regel im Gleichdruckprozess, also mit der isobaren Wärmekapazität Cp. Mittlerweile arbeiten Verbrennungsmotoren auch im Seiliger-Prozess, der eine Überlagerung des Gleichdruckprozesses und des Gleichraumprozesses darstellt. Der reale thermodynamische Gleichraumprozess erzeugt in der Regel um mehr als 30% höhere Verbrennungsdrücke, die sich vereinfacht wie folgt berechnen:

$$p\_Gesamt = p\_Kompression + p\_Verbrennungsdruck$$

R = Gaskonstante Abgas (R=300 J/kgK)
Vc = Brennraum-Volumen

$$p\_isobar = (Q\_Brennstoff * R) / ( Cp * Vc)$$

p_isobar = Verbrennungsdruck Gleichdruckprozess (Cp)
Q_Brennstoff = Wärmemenge pro Arbeitshub und Zylinder
Beispiel: für 1 mg Diesel ist Q_Brennstoff = 42,3 J

$$p\_isochor = (Q\_Brennstoff * R) / (Cv * Vc)$$

p_isochor = Verbrennungsdruck Gleichraumprozess (Cv)

Bei Verbrennungsmotoren ist der Gleichraumwirkungsgrad deutlich höher als der Gleichdruckwirkungsgrad . Der effektive Gleichdruckwirkungsgrad liegt bei Saugmotoren zwischen 30% und 35% und bei aufgeladenen Motoren zwischen 40% und 45%. Der effektive Gleichraumwirkungsgrad erreicht bei Saugmotoren bis zu 45% (0% AGR) und aufgeladenen Motoren 53% (0% AGR) und mehr (AGR = Abgasrückführung).

Um weiter höhere effektive Wirkungsgrade bei Saugmotoren einzustellen (beispielsweise > 36%) muss der Gleichraumgrad des Verbrennungsprozesses erhöht werden. Eine Erhöhung des Gleichraumgrades führt aber zu einer zeitweisen Instabilität der Verbrennung, da im Brennraum ein Teil der Ladung, d.h. des Kraftstoff-Luft-Gemisches, im Gleichdruckprozess verbrennt, wohingegen bei einem anderen Teil der Ladung an einem anderen Ort im Brennraum eine Gleichraumverbrennung stattfindet. Dies führt zu großen Drucksprüngen im Brennraum, was sich als starkes Klopfen bemerkbar macht.

Erst eine nahezu vollständige Gleichraumverbrennung stabilisiert den Prozess wieder, wobei insbesondere das Klopfen, welches durch die parallel ablaufenden Gleichdruck- und Gleichraumprozesse im Brennraum verursacht wurde, nun durch die hohen Druckanstiegsraten von mehr als 30 bar / Grad Kurbelwellenwinkel (KW) ersetzt wird. Ein stabiler Gleichraumprozess liegt vor, wenn der effektive Wirkungsgrad bei Saugmotoren im Volllastbereich über 42% und bei aufgeladenen Verbrennungsmotoren über 52% erreicht.

Die Realisierung und Steuerung des Gleichraumprozesses im Verbrennungsmotor erweist sich als sehr schwierig vor allem im Volllastbereich. Um eine vollständige Gleichraumverbrennung zu erzeugen, muss die Verbrennung bei Vc = const. erfolgen und das homogene Kraftstoff-Luft-Gemisch im gesamten Brennraum oder Volumen Vc des Brennraums gleichzeitig gezündet werden.

Da die Verbrennung beim Otto- und Dieselmotor durch den Lauf einer Flammfront charakterisiert ist, stellt sich keine Gleichraumverbrennung ein, sondern eher eine Mischform (wie z.B. der Seiliger-Prozess).

Das bekannteste Gleichraumbrennverfahren ist das HCCI-Verfahren. Bei der homogenen Selbstzündung wird ein homogenes, mageres Kraftstoff-Luft-Gemisch in den Brennraum eingebracht, das sich während des Verdichtungstaktes gleichzeitig im gesamten Brennraum entzündet. Der Energieumsatz ist so schnell, dass die Verbrennung bei konstantem Volumen (Vc) stattfindet und damit gilt:

$$p = (Q * R) / (Cv * Vc)$$

Bei gleicher Brennstoffmenge (Q) ist der Verbrennungsdruck um mehr als 30% höher als bei der Flammfront-Verbrennung (Gleichdruckprozess).

Der Nachteil beim HCCI-Verfahren ist neben den hohen Druckgradienten die mangelhafte Steuerung des Verfahrens.

Die Verbrennung beim HCCI-Verfahren läuft in einer Zweistufenzündung ab, und zwar zuerst in eine Niedertemperaturreaktion ("cool flame") und nach einer kurzen Pause erfolgt die Hochtemperaturreaktion ("hot flame") d.h. die eigentliche Verbrennung.

Somit besteht der Wunsch, eine reale thermodynamische Gleichraumverbrennung des zuvor eingebrachten Kraftstoff-Luft-Gemisches mit der spezifischen Wärmekapazität Cv in der wirkungsgradoptimalen Kolbenstellung einzuleiten.

Ausgehend hiervon liegt der Erfindung insbesondere die Aufgabe zugrunde, bei einem Verfahren der eingangs genannten Art die Gleichraumverbrennung des Kraftstoff-Luft-Gemisches besser steuern zu können.

Diese Aufgabe wird erfindungsgemäß durch ein Verfahren nach Anspruch 1 gelöst. Bevorzugte Weiterbildungen der Erfindung sind in den Unteransprüchen und in der nachfolgenden Beschreibung gegeben.

Gemäß der Erfindung ist oder wird ein Verfahren zum Betreiben einer Hubkolbenmaschine, die eine Kurbelwelle, einen oder wenigstens einen Zylinder, einen oder wenigstens einen in dem Zylinder zwischen einem unteren Totpunkt und einem oberen Totpunkt in einer Hubrichtung hin und her bewegbaren Kolben und ein oder wenigstens ein Pleuel aufweist, mittels welchem der Kolben mit der Kurbelwelle verbunden ist, wobei in einen Brennraum der Hubkolbenmaschine ein Kraftstoff-Luft-Gemisch eingebracht, vorzugsweise eingespritzt, und durch den Kolben verdichtet wird, bis sich das Kraftstoff-Luft-Gemisch, vorzugsweise selbst, entzündet und unter Gleichraumbedingungen im Brennraum verbrennt, in den ein Pilotkraftstoff eingebracht und verbrannt wird, dessen Verbrennung eine Niedertemperaturreaktion und eine dieser nachfolgende Hochtemperaturreaktion aufweist, insbesondere dadurch weitergebildet, dass die Verbrennung des Kraftstoff-Luft-Gemisches unter Gleichraumbedingungen durch den Zeitpunkt der durch die Niedertemperaturreaktion des Pilotkraftstoffs erfolgten Wärmefreisetzung und/oder durch die Menge der durch die Niedertemperaturreaktion des Pilotkraftstoffs freigesetzten Wärme gesteuert wird.

Durch den Zeitpunkt und/oder die Menge der Wärmefreisetzung der Niedertemperaturreaktion des Pilotkraftstoffs lässt sich die Gleichraumverbrennung des Kraftstoff-Luft-Gemisches steuern. Insbesondere ist eine sehr rasche und nahezu gleichzeitige Verbrennung des in den Brennraum eingebrachten Kraftstoff-Luft-Gemisches erzielbar. Dadurch ist es z.B. auch möglich, die Menge an durch die Verbrennung entstehenden Stickoxiden gering zu halten.

Der Pilotkraftstoff wird bevorzugt in den Brennraum eingespritzt. Beispielsweise wird der Pilotkraftstoff nach dem Einbringen oder Einspritzen des Kraftstoff-Luft-Gemisches und/oder vor der Entzündung des Kraftstoff-Luft-Gemisches und/oder vor Erreichen des oberen Totpunkts in den Brennraum eingebracht oder eingespritzt. Bevorzugt weist der Pilotkraftstoff eine größere Zündwilligkeit als das Kraftstoff-Luft-Gemisch auf, insbesondere derart, dass sich der Pilotkraftstoff, vorzugsweise selbst, entzündet und eine Verbrennung des Pilotkraftstoffs insbesondere beginnt, bevor die Verbrennung des Kraftstoff-Luft-Gemisches beginnt.

Die Menge des in den Brennraum eingebrachten Pilotkraftstoffs ist bevorzugt kleiner oder sehr viel kleiner als die Menge des in den Brennraum eingebrachten Kraftstoff-Luft-Gemisches. Beispielsweise wird der Pilotkraftstoff als solcher oder in Form eines Pilotkraftstoff-Luft-Gemisches in den Brennraum eingebracht. Die Verbrennung des Pilotkraftstoffs erfolgt insbesondere im Brennraum.

Bevorzugt bewegt sich der Kolben in dem Zylinder zwischen dem unteren Totpunkt und dem oberen Totpunkt in Hubrichtung hin und her. Vorzugsweise ist oder wird die Kurbelwelle um eine Kurbelwellendrehachse drehbar oder gedreht. Vorteilhaft ist oder wird die Kurbelwelle mittels des Kolbens antreibbar oder angetrieben, vorzugsweise derart, dass die Kurbelwelle um die Kurbelwellendrehachse drehbar ist oder gedreht wird. Die Drehwinkelstellung der Kurbelwelle ist oder wird insbesondere durch den oder einen Kurbelwellenwinkel definiert und/oder charakterisiert. Der oder ein Kurbelwellenwinkel wird vorzugsweise mit dem Ausdruck KW abgekürzt wird. Der obere Totpunkt wird insbesondere mit dem Ausdruck OT abgekürzt. Ferner wird der untere Totpunkt vorzugsweise mit dem Ausdruck UT abgekürzt.

Vorteilhaft ist der Brennraum, insbesondere in Hubrichtung, zwischen dem Kolben und dem Zylinder oder einem Kopf des Zylinders vorgesehen. Der Kopf des Zylinders wird z.B. auch als Zylinderkopf bezeichnet. Insbesondere ist der Brennraum innerhalb des Zylinders vorgesehen. Der Brennraum wird beispielsweise auch als Arbeitsraum bezeichnet. Das Pleuel wird z.B. auch als Schubstange bezeichnet. Anstelle des Ausdrucks "verdichten" kann z.B. auch der Ausdruck "komprimieren" verwendet werden und umgekehrt. Das Einbringen und/oder Einspritzen des Pilotkraftstoffs in den Brennraum wird insbesondere als Piloteinspritzung bezeichnet.

Gleichraumbedingungen im Brennraum existieren bevorzugt in einem Bereich zwischen 10 Grad Kurbelwellenwinkel vordem oberen Totpunkt bis 10 Grad Kurbelwellenwinkel nach dem oberen Totpunkt. Dies liegt insbesondere daran, dass sich in diesem Bereich das Volumen des Brennraums nicht oder nicht wesentlich ändert. Bevorzugt erfolgt die Entzündung und/oder die Verbrennung des Kraftstoff-Luft-Gemischs in einem Bereich zwischen dem oberen Totpunkt und 10 Grad Kurbelwellenwinkel nach dem oberen Totpunkt. Vorzugsweise erfolgt die Entzündung und/oder die Verbrennung des Kraftstoff-Luft-Gemischs in einem Bereich zwischen 3 Grad Kurbelwellenwinkel nach dem oberen Totpunkt und 10 Grad Kurbelwellenwinkel nach dem oberen Totpunkt. Somit kann insbesondere vermieden werden, dass die Verbrennung gegen die Bewegung des Kolbens arbeitet. Vorteilhaft erfolgt das Einbringen oder Einspritzen des Pilotkraftstoffs vor Erreichen des oberen Totpunkts und/oder bevor der Kolben den oberen Totpunkt erreicht.

Die Entzündung des Kraftstoff-Luft-Gemisches ist bevorzugt eine kompressionsinduzierte Selbstentzündung. Vorzugsweise ist die Entzündung des Pilotkraftstoffs eine kompressionsinduzierte Selbstentzündung.

Die Entzündung und/oder die Verbrennung des Pilotkraftstoffs führt insbesondere zu einer Temperaturerhöhung des Kraftstoff-Luft-Gemisches im Brennraum und/oder zu einer Temperaturerhöhung im Brennraum. Bevorzugt endet die Verbrennung des Pilotkraftstoffs nach der Entzündung des Kraftstoff-Luft-Gemisches.

Bei der Hochtemperaturreaktion des Pilotkraftstoffs wird insbesondere mehr Wärme freigesetzt als bei der Niedertemperaturreaktion des Pilotkraftstoffs. Bevorzugt beginnt die Niedertemperaturreaktion des Pilotkraftstoffs vor der Entzündung des Kraftstoff-Luft-Gemisches. Vorzugsweise erhöht die Niedertemperaturreaktion des Pilotkraftstoffs die Temperatur des Kraftstoff-Luft-Gemisches im Brennraum und/oder die Temperatur im Brennraum. Vorteilhaft erfolgt die Hochtemperaturreaktion des Pilotkraftstoffs bei einer höheren Temperatur als die Niedertemperaturreaktion des Pilotkraftstoffs. Insbesondere liegt zwischen der Niedertemperaturreaktion des Pilotkraftstoffs und der Hochtemperaturreaktion des Pilotkraftstoffs eine, vorzugsweise kurze, Pause. Bevorzugt wird die Niedertemperaturreaktion des Pilotkraftstoffs durch das Verdichten des Kraftstoff-Luft-Gemisches, insbesondere zusammen mit dem Pilotkraftstoff, hervorgerufen und/oder eingeleitet und/oder induziert.

Gemäß einer Ausgestaltung weist die Verbrennung des Kraftstoff-Luft-Gemisches eine Niedertemperaturreaktion und eine dieser nachfolgende Hochtemperaturreaktion auf. Insbesondere wird bei der Hochtemperaturreaktion des Kraftstoff-Luft-Gemisches mehr Wärme freigesetzt als bei der Niedertemperaturreaktion des Kraftstoff-Luft-Gemisches. Bevorzugt beginnt die Niedertemperaturreaktion des Kraftstoff-Luft-Gemisches während oder nach der Niedertemperaturreaktion des Pilotkraftstoffs. Vorteilhaft wird durch die Niedertemperaturreaktion des Pilotkraftstoffs die Niedertemperaturreaktion des Kraftstoff-Luft-Gemisches initiiert. Vorteilhaft erfolgt die Hochtemperaturreaktion des Kraftstoff-Luft-Gemisches bei einer höheren Temperatur als die Niedertemperaturreaktion des Kraftstoff-Luft-Gemisches. Insbesondere liegt zwischen der Niedertemperaturreaktion des Kraftstoff-Luft-Gemisches und der Hochtemperaturreaktion des Kraftstoff-Luft-Gemisches eine, vorzugsweise kurze, Pause. Die Hochtemperaturreaktion des Kraftstoff-Luft-Gemisches bildet insbesondere einen Schwerpunkt der Verbrennung des Kraftstoff-Luft-Gemisches und/oder wird z.B. auch als Verbrennungsschwerpunkt bezeichnet. Vorzugsweise treibt die Verbrennung des Kraftstoff-Luft-Gemisches und/oder die Hochtemperaturreaktionen des Kraftstoff-Luft-Gemisches den Kolben an, der bevorzugt, insbesondere wiederum, die Kurbelwelle antreibt.

Bevorzugt laufen die Hochtemperaturreaktion des Pilotkraftstoffs und die Hochtemperaturreaktion des Kraftstoff-Luft-Gemisches, insbesondere zumindest zeitweise und/oder zeitweise und/oder zumindest teilweise und/oder teilweise und/oder im Wesentlichen, gleichzeitig ab. Vorzugsweise sind die Niedertemperaturreaktion des Pilotkraftstoffs und die Niedertemperaturreaktion des Kraftstoff-Luft-Gemisches vor der Hochtemperaturreaktion des Pilotkraftstoffs und der Hochtemperaturreaktion des Kraftstoff-Luft-Gemisches abgeschlossen.

Die Verbrennung des Kraftstoff-Luft-Gemisches unter Gleichraumbedingungen wird insbesondere durch den Zeitpunkt der durch die Niedertemperaturreaktion des Pilotkraftstoffs erfolgten Wärmefreisetzung und/oder durch die Menge der durch die Niedertemperaturreaktion des Pilotkraftstoffs freigesetzten Wärme gesteuert. Ergänzend oder alternativ wird die Verbrennung des Kraftstoff-Luft-Gemisches unter Gleichraumbedingungen z.B. durch den Zeitpunkt der durch die Niedertemperaturreaktion des Kraftstoff-Luft-Gemisches erfolgten Wärmefreisetzung und/oder durch die Menge der durch die Niedertemperaturreaktion des Kraftstoff-Luft-Gemisches freigesetzten Wärme gesteuert.

Beispielsweise wird die Verbrennung des Kraftstoff-Luft-Gemisches, insbesondere zusätzlich, durch den Zeitpunkt des Einbringens und/oder der Einspritzung des Pilotkraftstoffs und/oder durch die Zündwilligkeit des Pilotkraftstoffs gesteuert. Vorzugsweise ist oder wird das oder ein Verdichtungsverhältnis und/oder die oder eine Temperatur oder Ansaugtemperatur der Luft und/oder des Kraftstoff-Luft-Gemisches derart eingestellt, dass eine Verdichtungstemperatur von mindestens 720 K zwischen 12 Grad Kurbelwellenwinkel vor dem oberen Totpunkt bis 0 Grad Kurbelwellenwinkel vor dem oberen Totpunkt erreicht wird. Bei der vorgenannten Luft handelt es sich vorteilhaft um die Luft des Kraftstoff-Luft-Gemisches. Bevorzugt wird die Luft des Kraftstoff-Luft-Gemisches, insbesondere vor dem Einbringen und/oder dem Einspritzen des Kraftstoff-Luft-Gemisches, beispielsweise aus der Umgebung angesaugt.

Gemäß einer Ausgestaltung wird oder werden durch die Niedertemperaturreaktion des Pilotkraftstoffs der Druck im Brennraum erhöht und/oder die Temperatur im Brennraum von mindestens 720 K auf 800 K bis 1000 K erhöht, sodass insbesondere die oder eine Niedertemperaturreaktion des Kraftstoff-Luft-Gemisches initiiert wird.

Beispielsweise werden bei der Niedertemperaturreaktion des Pilotkraftstoffs aus den Teilchen und/oder Molekülen des Pilotkraftstoffs, insbesondere reaktionsfreudige, Radikale gebildet, z.B. durch Aufspaltung (Cracken) der Moleküle des Pilotkraftstoffs. Insbesondere erfolgt bei der Hochtemperaturreaktion des Pilotkraftstoffs die chemische Umsetzung der vorgenannten Radikale, beispielsweise mit Sauerstoff, vorzugsweise aus dem Kraftstoff-Luft-Gemisch.

Beispielsweise werden bei der Niedertemperaturreaktion des Kraftstoff-Luft-Gemisches aus den Teilchen und/oder Molekülen des Kraftstoffs des Kraftstoff-Luft-Gemisches, insbesondere reaktionsfreudige, Radikale gebildet, z.B. durch Aufspaltung (Cracken) der Moleküle des Kraftstoffs. Insbesondere erfolgt bei der Hochtemperaturreaktion des Kraftstoff-Luft-Gemisches die chemische Umsetzung der vorgenannten Radikale, beispielsweise mit Sauerstoff, vorzugsweise aus dem Kraftstoff-Luft-Gem isch.

Gemäß einer Weiterbildung ist die Cetanzahl des Pilotkraftstoffs größer als die Cetanzahl des Kraftstoff-Luft-Gemisches. Beispielsweise liegt die Cetanzahl des Pilotkraftstoffes in Bereich von 30 bis 100. Die Cetanzahl ist insbesondere ein Maß für die Zündwilligkeit eines Stoffes.

Der Kraftstoff des Kraftstoff-Luft-Gemisches ist oder umfasst insbesondere ein Gas. Beispielsweise ist oder umfasst Kraftstoff des Kraftstoff-Luft-Gemisches Methan und/oder Erdgas und/oder Propan. Bevorzugt ist oder umfasst der Pilotkraftstoff ein Öl. Beispielsweise ist oder umfasst der Pilotkraftstoff z.B. Dieselkraftstoff und/oder Pflanzenöl und/oder Heizöl.

Die wirkungsgradoptimale Kolbenstellung für die Gleichraumverbrennung ist je nach Motorgröße und Schubstangen-Verhältnis insbesondere 3 Grad bis 10 Grad Kurbelwellenwinkel (KW) nach dem oberen Totpunkt (OT). Insbesondere hat sich eine weitere Verlagerung des Verbrennungsschwerpunktes nach dem oberen Totpunkt bei der Gleichraumverbrennung als nicht zielführend erwiesen, da durch die vier- bis sechsmal schnellere Reaktionskinetik gegenüber Otto- und Dieselprozessen der Gleichraumprozess zerstört und die Verbrennung weiter in den Expansionstakt verschleppt würde.

Die Steuerung des Verbrennungsschwerpunktes des zuvor eingebrachten Kraftstoff-Luft-Gemisches in die wirkungsgradoptimale Kolbenstellung erfolgt insbesondere durch die Niedertemperaturreaktion ("cool flame") der Piloteinspritzung. Als Pilotkraftstoffe eignen sich z.B. Kraftstoffe mit einer Cetanzahl von 30 bis 100. Dieselkraftstoff setzt z.B. in der Niedertemperaturreaktion ("cool flame") 12% bis 14% seiner Energie frei. Je höher die Cetanzahl desto höher die Wärmefreigabe in der Niedertemperaturreaktion.

Die "cool flame" der Piloteinspritzung hat bevorzugt die Aufgabe, den Duck und die Temperatur im Brennraum von mindesten 720 K auf 850 K bis 1000 K zu erhöhen, sodass eine Niedertemperaturreaktion des zuvor eingebrachten Kraftstoff-Luft-Gemisches im Brennraum initiiert wird. Die Niedertemperaturreaktion der Piloteinspritzung verhindert insbesondere eine Frühzündung des zuvor eingebrachten Kraftstoff-Luft-Gemisches, da bei der Niedertemperaturreaktion noch nicht die Temperatur für die Hochtemperaturreaktion erreicht wird.

Das Verdichtungsverhältnis und die Ansaugtemperatur der Luft und/oder des Kraftstoff-Luft-Gemisches wird oder werden vorzugsweise so eingestellt, dass eine Verdichtungstemperatur von mindestens 720 K zwischen 12 Grad KW vor OT und 0 Grad KW vor OT oder zwischen 12 Grad KW vor OT und 6 Grad KW vor OT erreicht wird. Aufgrund des Zündverzuges der Piloteinspritzung und des Kraftstoff-Luft-Gemisches startet die Hochtemperaturreaktion ("hot flame") insbesondere nach dem oberen Totpunkt, also bevorzugt in der wirkungsgradoptimalen Kolbenstellung. Befindet sich der Kolben im oberen Totpunkt, so kann diese Kolbenstellung beispielsweise auch durch 0 Grad KW vor OT und/oder 0 Grad KW nach OT bezeichnet werden.

Die maßgeblichen Steuerungsparameter der Hauptverbrennung ("hot flame") des Kraftstoff-Luft-Gemisches in der wirkungsgradoptimalen Kolbenstellung sind insbesondere Zeitpunkt und/oder Menge der Niedertemperaturwärmefreisetzung von Piloteinspritzung und/oder Kraftstoff-Luft-Gemisch. Als sekundäre Steuerungsparameter kommen z.B. noch die Temperatur oder Ansaugtemperatur, insbesondere der Luft oder des Kraftstoff-Luft-Gemisches, und/oder das Verdichtungsverhältnis hinzu. Bei sehr mageren Kraftstoff-Luft-Gemischen ist z.B. eine Anhebung der Ansaugtemperatur anzustreben.

Die Niedertemperaturreaktionen ("cool flame") der Piloteinspritzung und des Kraftstoff-Luft-Gemisches laufen bevorzugt kurz hintereinander und/oder teilweise parallel ab, sodass die Hauptverbrennung ("hot flame") der Piloteinspritzung und des Kraftstoff-Luft-Gemisches gleichzeitig in der wirkungsgradoptimalen Kolbenstellung stattfinden. Die Niedertemperaturreaktion ("cool flame") des Kraftstoff-Luft-Gemisches ist insbesondere Voraussetzung für eine gleichzeitige Zündung und/oder Verbrennung im gesamten Brennraum.

Ein Unterschied zum bekannten Zündstrahlverfahren ist insbesondere die nicht erfolgte Niedertemperaturreaktion des Kraftstoff-Luft-Gemisches, da die Piloteinspritzung beim Zündstrahlverfahren kurz vor OT und bei, vorzugsweise deutlich, höheren Verdichtungstemperaturen eingespritzt wird, sodass eine sofortige Entzündung der Piloteinspritzung und damit eine sofortige Zündung des Kraftstoff-Luft-Gemisches erfolgt. Vorzugsweise ist, insbesondere ferner, die Einspritzmenge des Pilotkraftstoffs so gering, dass bei der Niedertemperaturreaktion der Piloteinspritzung keine, insbesondere nennenswerte oder wesentliche, Temperatursteigerung im Brennraum stattfindet. Die Folge ist, dass der Brennverlauf insbesondere einer turbulenten Flammfrontverbrennung entspricht, die entsprechend vier- bis sechsmal länger dauert als die Gleichraumverbrennung .

Gemäß einer Ausgestaltung wird durch das Verfahren eine, vorzugsweise reale, thermodynamische Gleichraumverbrennung in der Hubkolbenmaschine gesteuert und/oder eingeleitet. Dabei sind insbesondere der Zeitpunkt und/oder die Menge der Niedertemperaturwärmefreisetzung ("cool flame") der Piloteinspritzung und/oder des Kraftstoff-Luft-Gemisches primäre Steuerungsparameter.

Gemäß einer Weiterbildung ist oder wird das oder ein Verdichtungsverhältnis und/oder die Temperatur oder Ansaugtemperatur der Luft und/oder des Kraftstoff-Luft-Gemisches so eingestellt, dass eine Verdichtungstemperatur von mindestens 720 K zwischen 12 Grad Kurbelwellenwinkel vor OT bis 0 Grad Kurbelwellenwinkel vor OT erreicht wird.

Gemäß einer Ausgestaltung erhöht die Niedertemperaturreaktion ("cool flame") der Piloteinspritzung den Druck und/oder die Temperatur im Brennraum von mindestens 720 K auf 850 K bis 1000 K, sodass insbesondere die oder eine Niedertemperaturreaktion ("cool flame") des zuvor eingebrachten Kraftstoff-Luft-Gemisches im Brennraum initiiert wird.

Gemäß einer Weiterbildung ist oder muss vor der Hochtemperaturreaktion ("hot flame"), insbesondere des Pilotkraftstoffs und/oder des Kraftstoff-Luft-Gemisches, die Niedertemperaturreaktion ("cool flame") der Piloteinspritzung und des zuvor eingebrachten Kraftstoff-Luft-Gemisches abgeschlossen sein.

Die Erfindung wird nachfolgend anhand einer bevorzugten Ausführungsform unter Bezugnahme auf die Zeichnung beschrieben. In der Zeichnung zeigen:

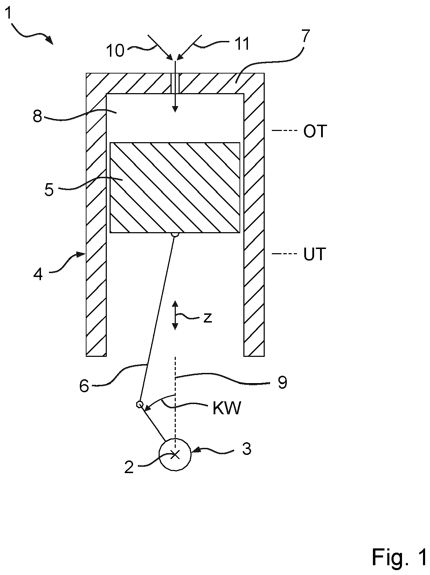

Fig. 1 eine schematische Ansicht einer Hubkolbenmaschine.

Aus Fig. 1 ist eine Hubkolbenmaschine 1 mit einer um eine Kurbelwellenachse 2 drehbaren Kurbelwelle 3, einem Zylinder 4, einem in dem Zylinder 4 zwischen einem unteren Totpunkt UT und einem oberen Totpunkt OT in einer Hubrichtung z hin und her bewegbaren Kolben 5 und wenigstens einem Pleuel 6 ersichtlich, mittels welchem der Kolben 5 mit der Kurbelwelle 3 verbunden ist. Ferner umfasst die Hubkolbenmaschine 1 einen innerhalb des Zylinders 4 zwischen dem Kolben 5 und einem Zylinderkopf 7 vorgesehenen Brennraum 8. Die Drehwinkelstellung der Kurbelwelle 3 bezüglich einer Referenzlage 9 wird durch einen Kurbelwellenwinkel KW charakterisiert. Dabei herrschen im Brennraum 8 in einem Bereich zwischen 10 Grad KW vor OT und 10 Grad KW nach OT Gleichraumbedingungen, in denen das Volumen des Brennraums 8 im Wesentlichen konstant bleibt.

In den Brennraum 8 der Hubkolbenmaschine 1 wird ein Kraftstoff-Luft-Gemisch 10 eingebracht und durch den Kolben 5 verdichtet. Nach dem Einbringen des Kraftstoff-Luft-Gemisches 10 wird in den Brennraum 8 ein Pilotkraftstoff 11 mit einer größeren Zündwilligkeit als das Kraftstoff-Luft-Gemisch 10 eingebracht, sodass der Pilotkraftstoff 11 sich aufgrund der Verdichtung entzündet und eine Verbrennung des Pilotkraftstoffs 11 beginnt, bevor eine Verbrennung des Kraftstoff-Luft-Gemisches 10 beginnt.

Die Verbrennung des Pilotkraftstoffs 11 weist eine Niedertemperaturreaktion und eine dieser nachfolgende Hochtemperaturreaktion auf. Ferner weist die Verbrennung des Kraftstoff-Luft-Gemisches 10 eine Niedertemperaturreaktion und eine dieser nachfolgende Hochtemperaturreaktion auf. Dabei wird die Niedertemperaturreaktion des Kraftstoff-Luft-Gemisches 10 durch die Niedertemperaturreaktion des Pilotkraftstoffs 11 initiiert. Bevorzugt beginnt die Niedertemperaturreaktion des Kraftstoff-Luft-Gemisches 10 nach oder während der Niedertemperaturreaktion des Pilotkraftstoffs 11. Vorteilhaft laufend die sich an die jeweilige Niedertemperaturreaktion anschließenden Hochtemperaturreaktionen des Pilotkraftstoffs 11 und des Kraftstoff-Luft-Gemisches 10 zumindest zeitweise gleichzeitig ab.

Die Hochtemperaturreaktionen des Kraftstoff-Luft-Gemisches 10 erfolgen in einem Bereich zwischen 3 Grad KW nach OT bis 10 Grad KW nach OT und somit unter Gleichraumbedingungen. Ferner treibt die Hochtemperaturreaktion des Kraftstoff-Luft-Gemisches 10 den Kolben 5 an, der wiederum die Kurbelwelle 3 antreibt.

Bezugszeichnliste

1    Hubkolbenmaschine
2    Kurbelwellendrehachse
3    Kurbelwelle
4    Zylinder
5    Kolben
6    Pleuel

7 Zylinderkopf
8 Brennraum
9 Referenzlage
10 Kraftstoff-Luft-Gemisch
11 Pilotkraftstoff

UT unterer Totpunkt
OT oberer Totpunkt
KW Kurbelwellenwinkel
z Hubrichtung

**Patentansprüche**

1. Verfahren zum Betreiben einer Hubkolbenmaschine (1), die eine Kurbelwelle (3), wenigstens einen Zylinder (4), wenigstens einen in dem Zylinder (4) zwischen einem unteren Totpunkt (UT) und einem oberen Totpunkt (OT) in einer Hubrichtung (z) hin und her bewegbaren Kolben (5) und wenigstens ein Pleuel (6) aufweist, mittels welchem der Kolben (5) mit der Kurbelwelle (3) verbunden ist, wobei in einen Brennraum (8) der Hubkolbenmaschine (1) ein Kraftstoff-Luft-Gemisch (10) eingebracht und durch den Kolben (5) verdichtet wird, bis sich das Kraftstoff-Luft-Gemisch (10) entzündet und unter Gleichraumbedingungen im Brennraum (8) verbrennt, in den ein Pilotkraftstoff (11) eingebracht und verbrannt wird, dessen Verbrennung eine Niedertemperaturreaktion und eine dieser nachfolgende Hochtemperaturreaktion aufweist, **dadurch gekennzeichnet, dass** die Verbrennung des Kraftstoff-Luft-Gemisches (10) unter Gleichraumbedingungen durch den Zeitpunkt der durch die Niedertemperaturreaktion des Pilotkraftstoffs (11) erfolgten Wärmefreisetzung und/oder durch die Menge der durch die Niedertemperaturreaktion des Pilotkraftstoffs (11) freigesetzten Wärme gesteuert wird.

2. Verfahren nach Anspruch 1, **dadurch gekennzeichnet, dass** die Niedertemperaturreaktion des Pilotkraftstoffs (11) vor der Entzündung des Kraftstoff-Luft-Gemisches (10) beginnt und die Temperatur im Brennraum (8) erhöht.

3. Verfahren nach Anspruch 1 oder 2, **dadurch gekennzeichnet, dass** die Verbrennung des Kraftstoff-Luft-Gemisches (10) eine Niedertemperaturreaktion und eine dieser nachfolgende Hochtemperaturreaktion aufweist.

4. Verfahren nach Anspruch 3, **dadurch gekennzeichnet, dass** die Niedertemperaturreaktion des Kraftstoff-Luft-Gemisches (10) während oder nach der Niedertemperaturreaktion des Pilotkraftstoffs (11) beginnt.

5. Verfahren nach Anspruch 3 oder 4, **dadurch gekennzeichnet, dass** die Niedertemperaturreaktion des Kraftstoff-Luft-Gemisches (10) durch die Niedertemperaturreaktion des Pilotkraftstoffs (11) initiiert wird.

6. Verfahren nach einem der Ansprüche 3 bis 5, **dadurch gekennzeichnet, dass** die Hochtemperaturreaktion des Pilotkraftstoffs (11) und die Hochtemperaturreaktion des Kraftstoff-Luft-Gemisches (10) zumindest zeitweise gleichzeitig ablaufen.

7. Verfahren nach einem der Ansprüche 3 bis 6, **dadurch gekennzeichnet, dass** die Niedertemperaturreaktion des Pilotkraftstoffs (11) und die Niedertemperaturreaktion des Kraftstoff-Luft-Gemisches (10) vorder Hochtemperaturreaktion des Pilotkraftstoffs (11) und der Hochtemperaturreaktion des Kraftstoff-Luft-Gemisches (10) abgeschlossen sind.

8. Verfahren nach einem der vorangehenden Ansprüche, **dadurch gekennzeichnet, dass** die Cetanzahl des Pilotkraftstoffs (11) größer ist als die Cetanzahl des Kraftstoff-Luft-Gemisches (10).

Fig. 1

Europäisches
Patentamt

European
Patent Office

Office européen
des brevets

**EUROPÄISCHER RECHERCHENBERICHT**

Nummer der Anmeldung

EP 20 21 4912

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 01/86128 A2 (CUMMINS INC [US]) 15. November 2001 (2001-11-15) * Absatz [0012] - Absatz [0039] * * Absatz [0040] - Absatz [0052] * ----- | 1-8 | INV. F02D41/30 F02D41/40 F02D19/10 F02M25/00 |
| X | EP 3 006 708 A1 (GE JENBACHER GMBH & CO OG [AT]) 13. April 2016 (2016-04-13) * Absätze [0007], [0031] - [0054]; Abbildungen 1,2 * ----- | 1-8 | F02D15/00 F02B1/12 F02B7/00 |
| X | EP 1 234 966 A2 (CLEAN AIR PARTNERS INC [US]) 28. August 2002 (2002-08-28) * Absätze [0003] - [0009], [0047] - [0049] * ----- | 1-8 | |
| X | US 2015/285178 A1 (JOHN BOBBY [US]) 8. Oktober 2015 (2015-10-08) * Absätze [0002], [0012], [0014], [0019]; Abbildungen 1-3 * ----- | 1-8 | |
| X | DE 198 10 935 A1 (DAIMLER CHRYSLER AG [DE]) 16. September 1999 (1999-09-16) * Spalte 4, Zeile 4 - Spalte 5, Zeile 31; Abbildungen * ----- | 1-7 | RECHERCHIERTE SACHGEBIETE (IPC) F02D F02M |

Der vorliegende Recherchenbericht wurde für alle Patentansprüche erstellt

| Recherchenort | Abschlußdatum der Recherche | Prüfer |
|---|---|---|
| München | 20. April 2021 | Aign, Torsten |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 20 21 4912

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-04-2021

| Im Recherchenbericht angeführtes Patentdokument | Datum der Veröffentlichung | Mitglied(er) der Patentfamilie | Datum der Veröffentlichung |
|---|---|---|---|
| WO 0186128 A2 | 15-11-2001 | AU 6122901 A | 20-11-2001 |
| | | AU 6124501 A | 20-11-2001 |
| | | AU 6124701 A | 20-11-2001 |
| | | AU 6299501 A | 20-11-2001 |
| | | DE 10191817 T1 | 30-01-2003 |
| | | DE 10191818 B3 | 10-01-2013 |
| | | DE 10191819 T1 | 24-04-2003 |
| | | DE 10191820 T1 | 27-02-2003 |
| | | GB 2369158 A | 22-05-2002 |
| | | GB 2369159 A | 22-05-2002 |
| | | GB 2370316 A | 26-06-2002 |
| | | GB 2370317 A | 26-06-2002 |
| | | JP 3881243 B2 | 14-02-2007 |
| | | JP 4180278 B2 | 12-11-2008 |
| | | JP 2003532826 A | 05-11-2003 |
| | | JP 2003532827 A | 05-11-2003 |
| | | JP 2003532828 A | 05-11-2003 |
| | | JP 2003532829 A | 05-11-2003 |
| | | US 2002007816 A1 | 24-01-2002 |
| | | US 2002017269 A1 | 14-02-2002 |
| | | US 2002020388 A1 | 21-02-2002 |
| | | US 2002040692 A1 | 11-04-2002 |
| | | US 2003168037 A1 | 11-09-2003 |
| | | US 2004149255 A1 | 05-08-2004 |
| | | WO 0186125 A2 | 15-11-2001 |
| | | WO 0186126 A2 | 15-11-2001 |
| | | WO 0186127 A2 | 15-11-2001 |
| | | WO 0186128 A2 | 15-11-2001 |
| EP 3006708 A1 | 13-04-2016 | AT 516289 A1 | 15-04-2016 |
| | | BR 102015024886 A2 | 02-08-2016 |
| | | CN 105484884 A | 13-04-2016 |
| | | EP 3006708 A1 | 13-04-2016 |
| | | JP 2016075275 A | 12-05-2016 |
| | | KR 20160041005 A | 15-04-2016 |
| | | KR 20170102443 A | 11-09-2017 |
| | | US 2016097338 A1 | 07-04-2016 |
| EP 1234966 A2 | 28-08-2002 | AT 324520 T | 15-05-2006 |
| | | DE 60210846 T2 | 31-08-2006 |
| | | EP 1234966 A2 | 28-08-2002 |
| | | JP 4122162 B2 | 23-07-2008 |
| | | JP 2002327633 A | 15-11-2002 |
| | | US 2003024246 A1 | 06-02-2003 |
| | | US 2004118116 A1 | 24-06-2004 |

EPO FORM P0461

Für nähere Einzelheiten zu diesem Anhang : siehe Amtsblatt des Europäischen Patentamts, Nr.12/82

Seite 1 von 2

**ANHANG ZUM EUROPÄISCHEN RECHERCHENBERICHT**
**ÜBER DIE EUROPÄISCHE PATENTANMELDUNG NR.**   EP 20 21 4912

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-04-2021

| Im Recherchenbericht angeführtes Patentdokument | Datum der Veröffentlichung | Mitglied(er) der Patentfamilie | Datum der Veröffentlichung |
|---|---|---|---|
| US 2015285178 A1 | 08-10-2015 | KEINE | |
| DE 19810935 A1 | 16-09-1999 | DE 19810935 A1 | 16-09-1999 |
| | | EP 1062412 A1 | 27-12-2000 |
| | | US 6499458 B1 | 31-12-2002 |
| | | WO 9947797 A1 | 23-09-1999 |

EPO FORM P0461

Für nähere Einzelheiten zu diesem Anhang : siehe Amtsblatt des Europäischen Patentamts, Nr.12/82

Seite 2 von 2